# EUROPÄISCHE PATENTSCHRIFT

(11) **EP 1 451 493 B1**
(45) Veröffentlichungstag und Bekanntmachung des Hinweises auf die Patenterteilung: **28.06.2006**
(21) Anmeldenummer: 02787867.7
(22) Anmeldetag: 29.11.2002
(51) Int. Cl.: F16H 61/12, F16H 61/00

(54) **VERFAHREN ZUR ANSTEUERUNG EINER DRUCKVERSORGUNGSEINRICHTUNG IN EINEM HYDRAULIKKREIS**
METHOD FOR CONTROLLING A PRESSURE SUPPLY DEVICE IN A HYDRAULIC CIRCUIT
PROCEDE DE COMMANDE D'UN DISPOSITIF D'ALIMENTATION EN PRESSION DANS UN CIRCUIT HYDRAULIQUE

(30) Priorität: 04.12.2001 DE 10159519
(43) Veröffentlichungstag der Anmeldung: 01.09.2004
(73) Patentinhaber: ZF FRIEDRICHSHAFEN AG, 88038 Friedrichshafen (DE)
(72) Erfinder: KNOBLAUCH, Thomas, 66123 Saarbrücken (DE); EBNER, Otto, 88048 Friedrichshafen (DE); SCHWEIGER, Klaus, 88046 Friedrichshafen (DE); WINKEL, Matthias, 88250 Weingarten (DE); RÜCHARDT, Christoph, 88131 Bodolz (DE); SCHWENGER, Andreas, 38446 Wofsburg/Reislingen (DE); GANSOHR, Marcus, 88682 Neufrach (DE)
(86) Internationale Anmeldenummer: PCT/EP2002/013463
(87) Internationale Veröffentlichungsnummer: WO 2003/048614

(56) Entgegenhaltungen:
- EP-A- 1 205 690
- US-A- 4 393 732
- US-A- 4 856 380
- US-A- 5 105 922
- US-A- 6 022 293
- US-B1- 6 273 525
- PATENT ABSTRACTS OF JAPAN vol. 2000, no. 05, 14. September 2000 (2000-09-14) & JP 2000 055184 A (HITACHI LTD), 22. Februar 2000 (2000-02-22)

## Beschreibung

Die vorliegende Erfindung betrifft ein Verfahren zur Ansteuerung einer Druckversorgungseinrichtung in einem Hydraulikkreis, insbesondere in einem Hydraulikkreis eines Automatgetriebes gemäß dem Oberbegriff des Patentanspruches 1, das aus der US 5 105 922 bekannt ist.

Ein Hydraulikkreis umfasst üblicherweise eine Vorrichtung zur Erzeugung des Systemdrucks, beispielsweise eine Druckpumpe (Hydraulikpumpe), einen Drucksensor, einen Druckspeicher, ein Überdruckventil, ein Rückschlagventil und einen oder mehrere Verbraucher, die mit einem Arbeitsventil verbunden sind.

Nach dem Stand der Technik wird im Normalbetrieb des Hydraulikkreises die Hydraulikpumpe angesteuert, wenn der Systemdruck einen bestimmten unteren Schwellenwert unterschreitet und abgeschaltet, wenn ein bestimmter oberer Schwellenwert erreicht bzw. überschritten wird. Dadurch wird das System in einem bestimmten Druckbereich betrieben. Typische Werte für den obere Schwellenwert liegen in der Größenordnung von 80 bar, für den unteren Schwellenwert dahingegen bei etwa 60 bar, wobei zwischen 60 bar und etwa 40 bar das System mit Einschränkungen betreibbar ist. Ab 90 bar öffnet das Überdruckventil, das nach Absenkung des Druckes, bei z.B. 65 bar schließt. Je nach Bedarf sind andere Werte für die Schwellenwerte und die Grenzdrücke zu berücksichtigen.

Wenn in einem derartigen Hydrauliksystem bzw. Hydraulikkreis das Drucksensorsignal - beispielsweise aufgrund eines Ausfalls des Drucksensors - nicht verfügbar ist bzw. ein direkter Zugang zum Systemdruck nicht mehr gegeben ist, ist die Ansteuerung problematisch. Dies führt dazu, dass das System entweder abgeschaltet wird oder dass die Hydraulikpumpe permanent betätigt wird.

Diese Vorgehensweise weist den Nachteil auf, dass durch die permanente Betätigung die Pumpe dauerhaft belastet und aufgrund des erhöhten Verschleißes eventuell beschädigt wird. Zudem wird das Überdruckventil ständig beansprucht, wodurch es auch einem erhöhten Verschleiß ausgesetzt wird.

Der vorliegenden Erfindung liegt die Aufgabe zugrunde, ein Verfahren zur Ansteuerung einer Druckversorgungseinrichtung in einem Hydraulikkreis, insbesondere in einem Hydraulikkreis eines automatischen Getriebes anzugeben, welches für den Fall, dass der Drucksensor ausfällt bzw. ein direkter Zugang zum Systemdruck nicht mehr gegeben ist, die Verfügbarkeit des Hydraulikkreises und einen schonenden Betrieb dessen Elemente gewährleistet.

Insbesondere soll die Einschaltdauer und die Einschalthäufigkeit der Pumpe und des Überdruckventils begrenzt werden, um den Verschleiß so gering wie möglich zu halten.

Diese Aufgabe wird durch die Merkmale des kennzeichnenden Teils des Patentanspruchs 1 gelöst. Weitere Ausgestaltungen gehen aus den Unteransprüchen hervor.

Demnach wird für den Fall des Eintretens eines Fehlerzustandes vorgeschlagen, den aktuellen Systemdruck indirekt zu ermitteln bzw. zu berechnen und die Hydraulikpumpe anhand dieser ermittelten bzw. errechneten Werte anzusteuern bzw. zu betreiben. Hierbei wird die Hydraulikpumpe dann eingeschaltet, wenn der errechnete Systemdruck einen bestimmten Schwellenwert unterschreitet und abgeschaltet, wenn ein bestimmter oberer Schwellenwert vom errechneten Systemdruck erreicht bzw. überschritten wird.

Erfindungsgemäß wird der Systemdruck wie folgt ermittelt bzw. berechnet:

Anhand des letzten aktuellen Signals des Drucksensors vor dem Eintreten des Fehlerzustandes wird über die Einschaltdauer der Arbeitsventile des Verbrauchers und über die Wegposition der Kolben bzw. der Wähl- und Gangkolben der beteiligten Aktuatoren der Volumenverbrauch an Hydrauliköl berechnet bzw. ermittelt. Für den Fall eines Automatgetriebes handelt es sich hierbei um den Wähl- und Gangkolben des Getriebeaktuators und um den Kolben des Kupplungsaktuators. Anschließend wird mittels der Druck/Volumen-Kennlinie des Druckspeichers der Systemdruck berechnet.

Im Rahmen einer bevorzugten Variante des erfindungsgemäßen Verfahrens wird zu dem berechneten Volumenverbrauch an Hydrauliköl ein vorbestimmter Wert addiert, um den Betrieb des Hydraulikkreises in einem sicheren Zustand zu gewährleisten. Leckageverluste können in Form eines Offsets berücksichtigt werden.

Für den Fall, dass das letzte aktuelle Signal des Drucksensors nicht verfügbar oder, z.B. bei einem Neustart des Hydraulikkreises, nicht vorhanden ist, wird der Systemdruck als Null angenommen und die Hydraulikpumpe solange betätigt, bis der Systemdruck anhand der oben erläuterten Berechnungen einen Wert im Arbeitsbereich erreicht.

Um kritische Situationen zu vermeiden, die dadurch entstehen können, dass der tatsächliche Systemdruck höher ist als der angenommene Wert Null sind die Schwellwerte des Überdruckventils so gewählt, dass der Hydraulikkreis, wenn auch eventuell mit Einschränkungen, betrieben werden kann.

Durch das erfindungsgemäße Verfahren bleibt der Hydraulikkreis bei Eintritt des Fehlers weiter verfügbar. Zudem werden die durch das permanente Ansprechen von Hydraulikpumpe und Überdruckventil entstehenden Nachteile, wie erhöhter Verschleiß und erhöhte Ausfallwahrscheinlichkeit, vermieden. Des weiteren führt die Erfindung zu einer Kostenreduzierung, da keine Notwendigkeit besteht, die betroffenen Bauteile stärker auszulegen.

## Patentansprüche

1. Verfahren zur Ansteuerung einer Druckversorgungseinrichtung in einem Hydraulikkreis, insbesondere in einem Hydraulikkreis eines Automatgetriebes, der eine Hydraulikpumpe, ein Überdruckventil und einen Verbraucher umfasst, wobei die Hydraulikpumpe angesteuert wird, wenn der Systemdruck einen bestimmten unteren Schwellenwert unterschreitet und abgeschaltet wird, wenn ein bestimmter oberer Schwellenwert des Systemdruckes erreicht bzw. überschritten wird, **dadurch gekennzeichnet, dass** für den Fall, dass die Daten des Systemdrucks nicht zur Verfügung stehen, der aktuelle Systemdruck berechnet wird.

2. Verfahren nach Anspruch 1, **dadurch gekennzeichnet, dass** zur Berechnung des Systemdrucks zuerst der Volumenverbrauch an Hydrauliköl ermittelt wird und dass anschließend mittels der Druck/Volumen-Kennlinie des Druckspeichers der Systemdruck berechnet wird.

3. Verfahren nach Anspruch 2, **dadurch gekennzeichnet, dass** der Volumenverbrauch an Hydrauliköl mittels des letzten aktuellen Signals des Drucksensors, der Einschaltdauer der Arbeitsventile des Verbrauchers und der Wegposition der Kolben bzw. der Wähl- und Gangkolben der beteiligten Aktuatoren berechnet bzw. ermittelt wird.

4. Verfahren nach Anspruch 3, **dadurch gekennzeichnet, dass** für den Fall eines Automatgetriebes die Wegposition der Wähl- und Gangkolben des Getriebeaktuators und des Kolbens des Kupplungsaktuators berücksichtigt werden.

5. Verfahren nach einem der Ansprüche 2 bis 4, **dadurch gekennzeichnet, dass** auf dem berechneten Volumenverbrauch an Hydrauliköl ein vorbestimmter Wert addiert wird, um den Betrieb des Hydraulikkreises in einem sicheren Zustand zu gewährleisten.

6. Verfahren nach einem der vorangehenden Ansprüche, **dadurch gekennzeichnet, dass** für den Fall, dass das letzte aktuelle Signal des Drucksensors nicht verfügbar ist, für den Systemdruck der Wert Null angenommen wird.

7. Verfahren nach Anspruch 6, **dadurch gekennzeichnet, dass** die Schwellwerte des Überdruckventils so gewählt werden, dass der Hydraulikkreis sicher betrieben wird.

## Claims

1. The invention relates to a method for the control of a pressure-supply installation within a hydraulic circuit, especially one of an automatic transmission, which comprises a hydraulic pump, a pressure relief valve and a consumer, with the hydraulic pump being activated when the system pressure falls below a specified lower threshold value and with the hydraulic pump being deactivated when a specified upper threshold value of the system pressure is reached or exceeded, **characterized in that** the current system pressure is calculated if the system pressure data are not available.

2. A method according to claim 1, **characterized in that** the consumption by volume of the hydraulic oil is determined before the system pressure is calculated with the help of the pressure/volume characteristic of the pressure accumulator.

3. A method according to claim 2, **characterized in that** the consumption by volume of the hydraulic oil is determined or calculated on the basis of the last current signal of the pressure sensor, the on-period of the working valves of the consumer, and the displacement position of the pistons or the selector and gear pistons of the actuators involved.

4. A method according to claim 3, **characterized in that** for an automatic transmission the displacement position of the selector and gear pistons of the transmission actuator and of the piston of the clutch actuator is considered.

5. A method according to one of the claims 2 through 4, **characterized in that** a predefined value is added to the calculated consumption by volume of the hydraulic oil in order to ensure safe operation of the hydraulic circuit.

6. A method according to one of the preceding claims, **characterized in that** if the latest signal of the pressure sensor is not available, the value zero will be assumed for the system pressure.

7. A method according to claim 6, **characterized in that** such threshold values of the pressure relief valve are chosen that will ensure safe operation of the hydraulic circuit.

## Revendications

1. Méthode de commande d'un dispositif d'alimentation en pression d'air dans un circuit hydraulique, en particulier dans un circuit hydraulique d'une transmission automatique, celui-ci comportant une pompe hydraulique, une soupape de surpression et un consommateur, sachant que la pompe hydraulique est commandée dès que, en descendant en dessous d'un certain seuil inférieur, la pression du système est coupée, ou, dès que la pression du système atteint et/ou dépasse un certain seuil supérieur, **caractérisée en ce que** dans le cas où les données relatives à la pression du système ne seraient pas disponibles, le système calcule la pression courante du système.

2. Méthode selon la revendication 1, **caractérisée en ce que** pour calculer la pression du système d'abord est déterminée la consommation du volume d'huile hydraulique et **en ce que**, ensuite, à l'aide de la loi pression/volume de l'accumulateur hydraulique est calculée la pression du système.

3. Méthode selon la revendication 2, **caractérisée en ce que** la consommation du volume d'huile hydraulique est calculée et/ou déterminée au moyen du dernier signal courant du capteur de pression, à l'aide de la durée d'actionnement des soupapes de travail du consommateur et de la position de déplacement des pistons et/ou des pistons de sélection et des pistons des rapports des actionneurs intéressés.

4. Méthode selon la revendication 3, **caractérisée en ce que** dans le cas d'une transmission automatique sont prises en considération la position de déplacement des pistons de sélection et des pistons des rapports de l'actionneur de la boîte de vitesses et la position du piston de l'actionneur d'embrayage.

5. Méthode selon une des revendications 2 à 4, **caractérisée en ce que** au volume d'huile hydraulique consommé calculé est additionnée une valeur prédéterminée, afin d'assurer le fonctionnement du circuit hydraulique dans un état sûr.

6. Méthode selon une des revendications précédentes, **caractérisée en ce que** dans le cas où le dernier signal courant du capteur de pression ne serait pas disponible, la valeur présumée de la pression du système est nulle.

7. Méthode selon la revendication 6, **caractérisée en ce que** les valeurs de seuil de la soupape de surpression sont choisies de manière à ce que le circuit hydraulique puisse fonctionner de façon sûre.
